# EUROPÄISCHE PATENTANMELDUNG

(11) **EP 1 634 633 A2**
(43) Veröffentlichungstag der Anmeldung: **15.03.2006**
(21) Anmeldenummer: 05018235.1
(22) Anmeldetag: 23.08.2005
(51) Int. Cl.: B01D 35/04, B01D 35/143, E03C 1/02, C02F 1/00

(54) **Einrichtung zur Überwachung und Anzeige der Gebrauchsdauer eines Wasserfilters**

(30) Priorität: 10.09.2004 DE 102004044302
(71) Anmelder: Grohe Water Technology AG & Co. KG, 58675 Hemer (DE)
(72) Erfinder: Kostorz, Jan Ryszard, 58710 Menden (DE)

(57) **Zusammenfassung**

Die Erfindung betrifft ein Verfahren zur Überwachung der Gebrauchsdauer eines mit einem Zapfventil (2) betriebenen Wasserfilters, wobei von einer Recheneinheit aus der vorgegebenen Filterkapazität die maximale Wasserentnahmezeit errechnet und gespeichert wird und mit der über die Öffnungs- und Schließbewegung des Zapfventils (2) erfasste Durchflusszeitraum mit der maximalen Wasserentnahmezeit verglichen wird, worauf zumindest nach dem Erreichen der maximalen Wasserentnahmezeit ein Signal für die Anzeige des Filterwechsels erzeugt wird, sowie eine Vorrichtung zur Anzeige des Gebrauchszeitraumes, wobei das Zapfventil (2) mit einem Griffstück betätigbar ist, das gleichzeitig das Gehäuse der Vorrichtung bildet, welches wenigstens einen Mikroprozessor als Recheneinheit sowie eine akustische und/oder optische Anzeigeeinrichtung (31) enthält.

## Beschreibung

Die Erfindung betrifft ein Verfahren zur Überwachung der Gebrauchsdauer eines mit einem Zapfventil betriebenen Wasserfilters sowie eine nach dem Verfahren arbeitende Vorrichtung zur Anzeige des Gebrauchszeitraums, wobei das Zapfventil mit einem Griffstück betätigbar ist.
Wasserfilter mit einer Filterwechselanzeige sind bekannt, wobei die Anzeige meist im Wasserauslassrohr integriert ist und relativ aufwendige Erfassungseinrichtungen vorgesehen sind.

Der Erfindung liegt die Aufgabe zugrunde, ein verbessertes Verfahren und eine Vorrichtung zur Durchführung des Verfahrens vorzuschlagen.

Diese Aufgabe wird mit dem im Anspruch 1 angegebenen Verfahren und mit der im Anspruch 5 angegebenen Vorrichtung gelöst.

Weitere Ausgestaltungen der Erfindung sind in den Ansprüchen 2 bis 4 und 6 bis 10 angegeben.

Mit den vorgeschlagenen Maßnahmen wird insbesondere erreicht, dass das erfindungsgemäße Verfahren keine besonderen Sonden zur Erfassung der Wasserqualität benötigt und die erfindungsgemäße Vorrichtung zur Anzeige völlig unabhängig von dem Zapfventil mit der Auslaufarmatur produziert, vertrieben und gewartet werden kann. Darüber hinaus kann die erfindungsgemäße Vorrichtung zur Anzeige auch nachträglich an bereits installierten Wasserzapfventilen von Wasserfiltern eingesetzt werden. Die Anzeigeeinrichtung kann dabei akustische, bevorzugt aber optische Signale über den Filterzustand dem Benutzer vermitteln. In einer bevorzugten Ausbildung der Erfindung wird nach dem Speichern der errechneten maximalen Wasserentnahmezeit von der Anzeigeeinrichtung zunächst ein grünes Lichtsignal erzeugt. Nach dem Erreichen von etwa 0,7 bis 0,9 der maximalen Wasserentnahmezeit wird von der Anzeigeeinrichtung dann zur frühzeitigen Information des Benutzers ein gelbes Lichtsignal erzeugt, das anzeigt, dass in naher Zukunft ein Filterwechsel fällig wird. Nach dem Erreichen der maximalen Wasserentnahmezeit wird dann von der Anzeigeeinrichtung ein rotes Lichtsignal erzeugt, das anzeigt, dass sofort ein Wechsel des Filters erforderlich ist, um einwandfreies gefiltertes Trinkwasser zapfen zu können.

Zweckmäßig wird die erfindungsgemäße Einrichtung zusätzlich so ausgelegt, dass unabhängig von der tatsächlichen Durchflussmenge durch den Wasserfilter - um ein unzulässiges Verkeimen des Wasserfilters zu verhindern - nach dem Ablauf eines maximalen Zeitraumes für die Beaufschlagung des Filters mit Wasser von der Anzeigeeinrichtung ein Signal erzeugt wird, mit dem angezeigt wird, dass in naher Zukunft ein Filterwechsel erforderlich ist und/oder ein Signal, z. B. ein rotes Lichtsignal über die Anzeigeeinrichtung abgegeben wird, dass ein Filterwechsel erforderlich ist.

Erfindungsgemäß kann die Vorrichtung als Griffstück des Zapfventils ausgebildet werden, das den ursprünglich vorgesehenen Drehgriff ersetzt. Hierbei kann die Drehspindel des Zapfventils zweckmäßig waagerecht angeordnet werden, so dass zur Erfassung des Zeitraums zwischen dem Öffnen und dem Schließen des Zapfventils in der Mantelfläche des Griffgehäuses ein Schalter, vorzugsweise ein Neigungsschalter, als Sensor angeordnet werden kann. Dabei können eine elektrische Schaltung und eine als Mikroprozessor ausgebildete Recheneinheit zu einer Platine zusammengefasst und an der vorstehenden Stirnseite in dem auch als Griff dienenden Gehäuse vorgesehen werden. An der vorstehenden Stirnseite des Gehäuses kann außerdem zweckmäßig eine abnehmbare Kappe vorgesehen werden, in der eine oder mehrere Batterien für die elektrische Energieversorgung angeordnet sind.

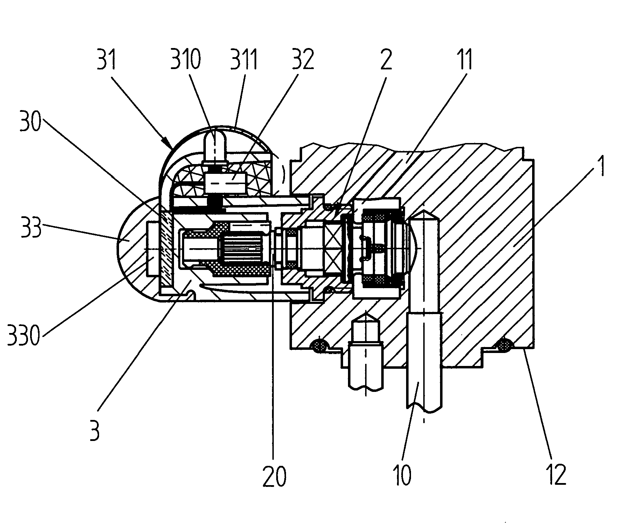

Ein Ausführungsbeispiel der Erfindung ist in der Zeichnung in Form eines zum Teil dargestellten Körpers einer Wasserauslaufarmatur mit einem Zapfventil im Längsschnitt dargestellt und wird im folgenden näher beschrieben.
In einem zum Teil dargestellten Körper 1 einer Wasserauslaufarmatur ist ein Zapfventil 2 mit einer waagerecht angeordneten Ventilspindel 20 vorgesehen. Das Zapfventil kann vorteilhaft bistabil ausgebildet sein, das entweder die Absperrposition oder die Offenposition einnimmt. Außerdem kann zusätzlich ein Durchflussbegrenzer vorgesehen werden, der den Wasserdurchfluss pro Zeiteinheit auf einen vorgegebenen Wert begrenzt.
Der Körper 1 ist mit einer Auflagefläche 12 versehen, mit der er z. B. auf einem Spültisch aufliegt und in bekannter Weise befestigbar ist. Der Wasserfilter ist dabei unterhalb des Spültisches angeordnet - in der Zeichnung nicht dargestellt - wobei das gefilterte Wasser von dem Wasserfilter über den Zufluss 10 dem Zapfventil 2 zugeführt ist. Bei geöffnetem Zapfventil 2 strömt das gefilterte Wasser stromabwärts hinter dem Zapfventil 2 in einem Abflusskanal 11 zu einem in der Zeichnung nicht dargestellten Wasserauslaufmundstück.

Auf den aus dem Körper 1 vorstehenden Endbereich der Ventilspindel 20 ist ein Gehäuse 3 als Griffstück drehfest aufgesteckt, welches in der Stecklage axial durch Schnappzungen gesichert ist, wie es üblicher Weise bei den bisher verwendeten Griffstücken der Zapfventile 2 vorgesehen ist. Das Gehäuse 3 trägt in der in der Zeichnung dargestellten Absperrstellung des Zapfventils 2 am Mantel einen Schalter 32, beispielsweise einen Neigungsschalter, mit dem als Sensor die Öffnungs- und Schließposition des Zapfventils 2 erfasst und somit der Vorrichtung der Öffnungszeitraum angegeben wird. Oberhalb des Schalters 32 ist eine Anzeigevorrichtung 31 vorgesehen, die von einer lichtdurchlässigen Haube 311 begrenzt ist. Unterhalb der Haube ist eine Leuchtdiode 310 angeordnet.
An der vorstehenden Stirnseite des Gehäuses 3 ist eine elektrische Steuerung mit einem Mikroprozessor als Recheneinheit in Form einer Platine 30 angeordnet, die über eine Leitung mit dem Schalter 32 und der Diode 310 verbunden ist.
An der Stirnseite des Gehäuses 3 ist außerdem ein Kappe 33 lösbar angeordnet, die einerseits die Platine 30 abdeckt und andererseits einen Aufnahmeraum für eine oder mehrere Batterien 330 für die elektrische Energieversorgung der Vorrichtung hat.

Die vorstehend beschriebene Filterüberwachungseinrichtung hat folgende Funktion:

Nach dem Einsatz eines neuen Filters bzw. eines Filterwechsels wird die Vorrichtung durch Einsatz einer Batterie 330 oder z. B. einer Betätigung eines nicht dargestellten Sensors in den Betriebsmodus versetzt. Die Recheneinheit bzw. der Prozessor ermittelt dann zunächst aus der vom Filterhersteller vorgegebenen Filterkapazität die maximale Wasserentnahmezeit und speichert diesen Wert. Gleichzeitig wird unabhängig hiervon der Einsatz des Filters im Wasser von der Vorrichtung erfasst und wegen einer Verkeimungsgefahr ein maximaler Zeitraum für die Benutzung vorgegeben. Vom Schalter 32 wird bei der Öffnungsdrehbewegung des Zapfventils 2 ein erstes Signal an die Recheneinheit abgegeben, wonach der Öffnungszeitraum des Zapfventils 2 so lange erfasst wird, bis das Zapfventil durch eine entgegengesetzte Drehbewegung wieder in seine Absperrstellung gelangt und von dem Schalter 32 ein zweites Signal an die Recheneinheit abgegeben wird, das dann die Zeiterfassung beendet. Die einzelnen erfassten Öffnungszeiträume werden von der Recheneinheit gespeichert und während eines Zapfvorganges mit der maximalen Wasserentnahmezeit verglichen.
Sobald die Summe der einzeln erfassten Wasserentnahmenzeiten die maximale Wasserentnahmezeit erreicht, oder der maximale Zeitraum für die Beaufschlagung des Filters mit Wasser verstrichen ist, wird von der Vorrichtung über die Anzeigevorrichtung 31 durch die Leuchtdiode 310 ein rotes Lichtsignal erzeugt, das dem Benutzer anzeigt, dass ein Filterwechsel erforderlich ist. Danach wird die Recheneinheit zurückgesetzt für die Überwachung eines neuen Wasserfilters.

Die vorstehend beschriebene Einrichtung kann vorteilhaft zusätzlich mit einer grünes Licht abgebenden Diode und einer gelbes Licht abgebenden Diode ausgestattet werden. Hierbei wird nach der errechneten maximalen Wasserentnahmezeit von der Vorrichtung die grünes Licht aussendende Diode angesteuert, so dass dem Benutzer angezeigt wird, dass der Wasserfilter betriebsbereit ist und einwandfrei gefiltertes Wasser gezapft werden kann.
Nach dem Erreichen von etwa 80% der maximalen Wasserentnahmezeit wird von der elektrischen Steuerung die grünes Licht aussendende Diode ausgeschaltet und die gelbes Licht aussendende Diode eingeschaltet, so dass der Benutzer daran erinnert wird, dass in naher Zukunft ein Filterwechsel fällig wird und z. B. ein neuer Filter beschafft werden kann. Wird schließlich die maximal mögliche Wasserentnahmezeit erreicht, so wird von der elektrischen Steuerung die gelbes Licht aussendende Diode ausgeschaltet und die rotes Licht aussendende Diode 310 eingeschaltet, wodurch dem Benutzer angezeigt wird, dass vor einer weiteren Benutzung zunächst ein Filterwechsel vorzunehmen ist.

## Patentansprüche

1. Verfahren zur Überwachung der Gebrauchsdauer eines mit einem Zapfventil (2) betriebenen Wasserfilters, **dadurch gekennzeichnet, dass**
a) nach der Inbetriebnahme bzw. eines Filterwechsels von einer Recheneinheit aus der vorgegebenen Filterkapazität die maximale Wasserentnahmezeit errechnet und gespeichert wird,
b) von der Öffnungsbewegung bis zur Schließbewegung des Zapfventils (2) der jeweilige Zeitraum von der Recheneinheit erfasst, gespeichert und mit der maximalen Wasserentnahmezeit verglichen wird und
c) beim Erreichen der maximalen Wasserentnahmezeit von der Recheneinheit ein Signal an eine Anzeigevorrichtung (31) zur Anzeige eines erforderlichen Filterwechsels gesendet wird und danach die Recheneinheit zurückgesetzt wird.

2. Verfahren nach Anspruch 1, **dadurch gekennzeichnet, dass** nach dem Erreichen von 0,7 bis 0,9 der maximalen Wasserentnahmezeit von der Recheneinheit ein erstes Signal und nach dem Erreichen der maximalen Wasserentnahmezeit ein zweites Signal an die Anzeigevorrichtung gesendet wird.

3. Verfahren nach Anspruch 1 oder 2, **dadurch gekennzeichnet, dass** unabhängig von der Öffnungs- und Schließbewegung des Zapfventils (2) von der Recheneinheit ein maximaler Zeitraum für die Beaufschlagung des Filters mit Wasser vorgegeben wird und nach dem Verstreichen der gesamten oder eines Teils des maximalen Zeitraums ein oder mehrere Signale von der Recheneinheit an die Anzeigevorrichtung (31) gesendet wird.

4. Verfahren nach wenigstens einem der vorhergehenden Ansprüche, **dadurch gekennzeichnet, dass** nach der Errechnung der maximalen Wasserentnahmezeit von der Recheneinheit ein Signal an die Anzeigevorrichtung gesendet wird, durch das die Betriebsbereitschaft des Wasserfilters angezeigt wird.

5. Vorrichtung zur Anzeige des Gebrauchszeitraumes eines über ein Zapfventil betriebenen Wasserfilters, wobei das Zapfventil mit einem Griffstück betätigbar ist, **dadurch gekennzeichnet, dass** die Vorrichtung ein Gehäuse (3) aufweist, das gleichzeitig das Griffstück für das Zapfventil (2) bildet, wobei wenigstens ein Mikroprozessor als Recheneinheit sowie eine akustische und/oder optische Anzeigevorrichtung (31) im Gehäuse (3) angeordnet sind.

6. Vorrichtung nach Anspruch 5, wobei das Griffstück becherförmig ausgebildet und waagerecht am Körper einer Wasserauslaufarmatur angeordnet ist, **dadurch gekennzeichnet, dass** an der vorstehenden Stirnseite des Gehäuses (3) eine elektrische Steuerung mit dem Mikroprozessor in Form einer Platine (30) angeordnet ist, während an der Mantelfläche wenigstens eine Anzeigevorrichtung (31) ausgebildet ist.

7. Vorrichtung nach Anspruch 5 oder 6, **dadurch gekennzeichnet, dass** als Anzeigevorrichtung (31) wenigstens eine Leuchtdiode (310) vorgesehen ist.

8. Vorrichtung nach einem der Ansprüche 5 bis 7, **dadurch gekennzeichnet, dass** im Mantelbereich des Gehäuses (3) ein Schalter (32), vorzugsweise ein Neigungsschalter, als Sensor für die Erfassung der Öffnungs- und Schließposition des zapfventils (2) vorgesehen ist.

9. Vorrichtung nach wenigstens einem der vorhergehenden Ansprüche 5 bis 8, **dadurch gekennzeichnet, dass** an der vorstehenden Stirnseite des Gehäuses (3) eine abnehmbare Kappe (33) vorgesehen ist, in der wenigstens eine Batterie (330) für die elektrische Energieversorgung angeordnet ist.

10. Vorrichtung nach wenigstens einem der vorhergehenden Ansprüche 5 bis 9, **dadurch gekennzeichnet, dass** die Anzeigevorrichtung (31) mit einer lichtdurchlässigen Haube (311) versehen ist, in der vorgesehen sind
- eine Leuchtdiode, die grünes Licht aussendet, wenn der Wasserfilter betriebsbereit ist,
- eine Leuchtdiode, die gelbes Licht aussendet, wenn bald ein Filterwechsel vorzunehmen ist und
- eine Leuchtdiode, die rotes Licht aussendet, wenn ein sofortiger Filterwechsel erforderlich ist.
